# EUROPÄISCHE PATENTANMELDUNG

(11) **EP 4 173 937 A1**
(43) Veröffentlichungstag der Anmeldung: **03.05.2023**
(21) Anmeldenummer: 21204807.8
(22) Anmeldetag: 26.10.2021
(51) Int. Cl.: B62K 19/16, B62K 21/12, B62J 50/22, B62J 33/00

(54) **FUNKTIONSINTEGRIERTER FAHRRADLENKER**

(71) Anmelder: Trentmann GmbH & Co. KG, 49186 Bad Iburg (DE)
(72) Erfinder: Trentmann, Frank, 49176 Bad Laer (DE)
(74) Vertreter: Weeg, Thomas

(57) **Zusammenfassung**

Die vorliegende Erfindung bezieht sich auf einen Fahrradlenker (2) aus einem faserverstärkten Kunststoff mit einem Lenkerkern, der einen Mittelabschnitt (4) zur Verbindung mit einem Steuerkopf (8) und seitlich aus-gerichteten, an gegenüberliegenden Seiten des Mittelabschnitts (4) ausgebildeten und mit dem Mittelabschnitt (4) verbundenen Lenkerarmen (6) aufweist.

Um die Komplexität eines mit angebauten Funktionsteilen versehenen Fahrradlenkers (2) sowie den Montageaufwand bei der Herstellung eines Fahrrades zu reduzieren, ist der Mittelabschnitt (4) des Fahrradlenkers (2) als Formteil (10) aus einem faserverstärkten Kunststoff hergestellt, das Formteil (10) bildet ein tragendes Element des Fahrradlenkers (2), und das Formteil (10) weist zumindest eine in den Mittelabschnitt (4) eingeformte Ausnehmung (40) zur Aufnahme eines Displays (34), eines Bedienelements (42), eines sonstigen Funktionsteils (44) und/oder eines elektrischen und/oder eines elektronischen Anschlusselements (46) auf.

## Beschreibung

Die vorliegende Erfindung bezieht sich auf einen Fahrradlenker aus einem faserverstärkten Kunststoff mit einem Lenkerkern, der einen Mittelabschnitt zur Verbindung mit einem Steuerkopf und seitlich ausgerichteten, an gegenüberliegenden Seiten des Mittelabschnitts ausgebildeten und mit dem Mittelabschnitt verbundenen Lenkerarmen aufweist.

Aus der Schrift EP 2 829 465 A1 ist ein gattungsgemäßer Fahrradlenker bekannt. Um Stöße nicht auf den Benutzer zu übertragen, die während der Fahrt über eine unebene Fahrbahn auf das Fahrrad einwirken, wird dort vorgeschlagen, den Fahrradlenker aus einem Kunststoff herzustellen, dessen Materialeigenschaften eine bessere Dämpfung von Stößen erlauben als die herkömmlichen aus Stahl hergestellten Lenker. Um den Fahrradlenker gleichwohl ausreichend stabil auszubilden, sind in seinem oberen Teil Versteifungseinsätze vorgesehen, durch die die Nachgiebigkeit des Fahrradlenkers wiederum eingeschränkt werden soll. Im Ergebnis soll also ein bewusst weiches Material verwendet werden, das Stöße und Vibrationen eliminieren soll, das aber wiederum so weich ist, dass es durch gesonderte Bauteile versteift werden muss, um überhaupt für den vorgesehenen Gebrauch tauglich zu sein. Im Ergebnis ist die durch das weichere Material notwendige Versteifung mittels zusätzlicher Bauteile aufwendig, und da die Versteifung nur in ihrer unmittelbaren Umgebung wirkt, ergibt sich mit dem offenbarten Fahrradlenker ein indifferentes Lenkgefühl.

Aus dem Stand der Technik ist es weiter bekannt, an einen Fahrradlenker mechanische, elektrische und/oder elektronische Funktionsteile anzubauen. Bei den mechanischen Funktionsteilen kann es sich beispielsweise um Handbremshebel, Bowdenzüge zur Betätigung einer Schaltung, eine Klingel, einen Bedienhebel zur Betätigung einer hydraulischen Sattelstütze, einen mechanischen Tachometer und/oder zur Einstellung von Federungskomponenten und dergleichen handeln. Als elektrische Funktionsteile kommen beispielsweise Scheinwerfer, Blinker, elektrische Signalhörner, elektrische Tachometer, Ein-/Aus-Schalter für derartige Funktionsteile und dergleichen in Betracht. Bei den elektronischen Funktionsteilen geht es beispielsweise um elektronische Anzeige- und Bedienvorrichtungen von elektrischen Antrieben, Displays, elektronische Tachometer, Navigationsgeräte, Handys und dergleichen. Aus dieser Aufzählung ist erkennbar, dass an einen Fahrradlenker je nach individueller Ausstattung des Fahrrads eine Vielzahl von Funktionsteilen an den Fahrradlenker angebaut sein kann. Die Befestigung der Funktionsteile am Fahrradlenker erfolgt üblicherweise über Rohrschellen, die mit Schrauben oder Spannbändern fest auf den Lenker aufgespannt sind. Da die üblichen Fahrradlenker aus einem metallischen Rohr hergestellt worden sind, war diese Befestigungsmöglichkeit kostengünstig und leicht zu realisieren.

Die an einen Fahrradlenker angebauten Funktionsteile arbeiten jedoch meistens nicht autonom, sondern sind auf eine mechanische, elektrische und/oder elektronische Verbindung mit fahrradseitig montierten Funktionsteilen angewiesen. Mit einer wachsenden Anzahl von Funktionsteilen, die an einen Fahrradlenker angebaut werden, steigt deshalb auch die Anzahl der Verbindungsteile, die vom Fahrradlenker her mit fahrradseitig montierten Funktionsteilen verbunden sind. Sowohl durch die Anzahl der an einen Fahrradlenker angebauten Funktionsteile als auch durch die entsprechende Anzahl von zugehörigen Verbindungsteilen wirken heutige Fahrradlenker optisch und bedientechnisch immer überladener. Hinzu kommt, dass auch der Montageaufwand für den Anbau und die Verbindung von an den Fahrradlenker angebauten Funktionsteilen mit fahrradseitig montierten Funktionsteilen immer größer wird.

Es ist die Aufgabe der vorliegenden Erfindung, die optische und bedientechnische Komplexität eines mit angebauten Funktionsteilen versehenen Fahrradlenkers sowie den Montageaufwand bei der Herstellung eines Fahrrades zu reduzieren.

Die Aufgabe wird für einen gattungsgemäßen Fahrradlenker gelöst, indem der Mittelabschnitt des Fahrradlenkers als Formteil aus einem faserverstärkten Kunststoff hergestellt ist, das Formteil ein tragendes Element des Fahrradlenkers bildet, und das Formteil zumindest eine in den Mittelabschnitt eingeformte Ausnehmung zur Aufnahme eines Displays, eines Bedienelements, eines sonstigen Funktionsteils und/oder eines elektrischen und/oder eines elektronischen Anschlusselements aufweist.

Über die Verwendung eines faserverstärkten Kunststoffs kann der Mittelabschnitt die mechanischen Lasten aufnehmen, die auf einen Fahrradlenker einwirken und die ein Fahrradlenker zwischen dem Vorderrad des Fahrrads und einem Benutzer übertragen muss. Der Mittelabschnitt ist dazu einerseits mit dem Steuerkopf und andererseits mit den Lenkerarmen verbunden. Der Mittelabschnitt kann einteilig mit den Lenkerarmen als ein einziges Formteil verbunden sein, der Mittelabschnitt kann aber auch aus mehreren Teilen zusammengesetzt sein, und die Lenkerarme können auch als separate Bauteile mit dem Mittelabschnitt zu einem Fahrradlenker zusammengebaut sein. An den Mittelabschnitt können auch noch zusätzliche Bauteile angebaut sein, wie Abdeckungen, Zierelemente, aerodynamische Verkleidungen, Designteile und dergleichen. Wesentlich ist dabei, dass der Mittelabschnitt in die statische und dynamische Vermittlung der beim Fahrradfahren auftretenden Kräfte als tragendes Bauteil eingebunden ist. Mit dem aus einem faserverstärkten Kunststoff hergestellten Mittelabschnitt sind die tragenden Funktionen, die ein herkömmlicher metallischer Rohrlenker bisher ausgefüllt hat, funktional abgedeckt. Auf den Einsatz eines metallischen Rohres in einem Fahrradlenker kann deshalb ganz oder zumindest im Bereich des Mittelabschnitts verzichtet werden.

Die Verwendung eines Kunststoff-Formteils als ein tragendes Element in einem Fahrradlenker eröffnet über die Funktion des Tragens und Lenkens hinaus aber auch neue Möglichkeiten, einen Fahrradlenker zu gestalten. Ein aus einem faserverstärkten Kunststoff hergestellter Mittelabschnitt erlaubt aber viel größere Freiheitsgrade in der körperlichen Gestaltung des Bauteils. Insbesondere schafft ein als Kunststoff-Formteil ausgeführter Mittelabschnitt neue Integrationsmöglichkeiten für Funktionsteile. Durch die konkrete Ausformung des Mittelabschnitts ist es möglich, ein oder mehrere Funktionsteile direkt in die Form des Fahrradlenkers zu integrieren, so dass die entsprechenden Funktionsteile später nicht mehr separat an den Lenker angebaut werden müssen, sondern diese einen in den Fahrradlenker integrierten Bestandteil bilden.

So kann das Werkzeug für die Herstellung des Mittelabschnitts so ausgestaltet sein, dass in dem Kunststoffteil, das den Mittelabschnitt bildet, zumindest eine Ausnehmung zur Aufnahme eines Displays, eines Bedienelements, eines sonstigen Funktionsteils und/oder eines elektrischen und/oder eines elektronischen Anschlusselements eingeformt ist. Das Werkzeug kann auch dazu ausgelegt sein, Haltepunkte, Klemm-, Click- und Rastverschlüsse gleich einteilig mit dem Mittelabschnitt auszuformen, so dass bei der späteren Montage des Displays, des Bedienelements und/oder des Anschlusselements auf Verbindungshilfsteile wie beispielsweise Schrauben, Nieten, Schraubschellen, Klebstoffe und dergleichen ganz oder zumindest teilweise verzichtet werden kann.

Bevorzugt ist die Ausnehmung so ausgestaltet, dass das Display, das Bedienelement, das sonstige Funktionsteil und/oder das Anschlusselement direkt oder mittels eines Adapterteils spielfrei in die Ausnehmung passen. Das Werkzeug zur Herstellung des Mittelabschnitts kann so ausgestaltet werden, das die Ausnehmung genau passend gestaltet ist. Gegebenenfalls können zum Fahrradlenker Adapterteile angeboten werden, die maßliche Unterschiede eines bestimmten in die Ausnehmung einzusetzenden Bauteils ausgleichen, so dass dann ein für sich nicht genau in die Ausnehmung passendes Bauteil spielfrei in die Ausnehmung eingebaut werden kann.

Bei einem entsprechenden Display kann es sich um die Anzeige- und Bediendisplays von elektrischen Motoren handeln, die heute in E-Bikes eingebaut werden. Die Displays zeigen üblicherweise zumindest den Ladezustand des zugehörigen Akkumulators, die für den Betrieb des elektrischen Antriebs gewählte Betriebsart und die gefahrene Geschwindigkeit an. Da es nur vergleichsweise wenige Hersteller elektrischer Antriebe für E-Bikes auf dem Weltmarkt gibt, und diese wenigen Hersteller selbst auch nur wenige unterschiedliche Displays für ihre Antriebe vertreiben, ist die Gesamtzahl der Displays, die in die Ausnehmung eingebaut werden könnten, noch sehr überschaubar. Möglicherweise gelingt der Fahrradindustrie in den nächsten Jahren ja auch eine Normung der Abmessungen für die verwendeten Displays, so dass sich die Zahl der mit unterschiedlichen Abmessungen versehenen Displays nochmals deutlich verringert. Bei der überschaubaren Zahl von möglichen Displays kann die Ausnehmung jedenfalls so gestaltet werden, dass zumindest eine Mehrheit von am Markt verfügbaren Displays in die Ausnehmung eingebaut werden können. Mit den Displays wären Funktionsteile in einen Fahrradlenker integriert, die sich zumindest in jedem E-Bike zwangsläufig finden. Aber auch Fahrräder ohne einen elektrischen Antrieb weisen schon heute teilweise Halterungen für Handys, Tablets oder Navigationsgeräte auf, für die die vorstehenden Ausführungen entsprechend gelten.

Die Ausnehmung kann auch dazu vorgesehen sein, zusätzlich oder ausschließlich Bedienelemente aufzunehmen. Bei den Bedienelementen kann es sich beispielsweise um mechanische und/oder elektrische Ein-/Aus-Schalter für Funktionsteile, elektronische Bedienfelder oder Tastaturen für Funktionsteile handeln. Es können auch Folientastaturen mit entsprechenden mechanischen, elektronischen und/oder elektronischen Komponenten darunter als Bedienelemente vorhanden sein. Wenn diese in der Ausnehmung platziert sind, stehen diese nicht mehr nach außen über die Umfangsgestalt des Fahrradlenkers hervor, sie beeinträchtigen damit nicht mehr den optischen Gesamteindruck.

In der Ausnehmung können auch sonstige Funktionsteile und/oder Anschlusselemente vorgesehen sein. Durch den entsprechenden in der Ausnehmung geschaffenen Anbau- und/oder Einbauraum kann die spätere Montage von Funktionsbauteilen vereinfacht werden.

Die Funktionsbauteile sind dabei bevorzugt witterungsgeschützt in den Fahrradlenker einbaubar, insbesondere deren elektrischen Anschlüsse, soweit vorhanden, dazu können gesonderte Abdeckungen und Deckel, transparent oder intransparent, vorgesehen sein, die ebenfalls bevorzugt maßgenau passend zu den Maßen der Anbau- und Einbauräume ausgebildet sind. Bei den Funktionsbauteilen kann es sich um elektrische und/oder elektronische Module handeln, die an einen Fahrradlenker angebaut werden, wie beispielsweise, aber nicht abschließend, Scheinwerfer, Tagfahrlichter, Bordcomputer, Bedien- oder Navigationsdisplays, elektrische oder elektronische Bedientasten oder mobile Telefone. Bei den Funktionsbauteilen kann es sich aber auch um Stecker, Kabelsätze, Bausteine zum Anschluss an ein lokales Busnetz wie beispielsweise ein CAN-Bus-Netz handeln, an die später die vorgenannten Funktionsbauteile oder weitere, auch fahrradseitig vorhandene elektronisehe Komponenten angeschlossen werden können. Durch die Integration von Funktionsteilen in den Fahrradlenker wirkt dieser optisch und technisch nicht mehr so überladen, wie das bei dem späteren Anbau der Funktionsteile an einen herkömmlichen Rohrlenker der Fall ist. Der Fahrradlenker wirkt optisch wie ein einziges Bauteil, obwohl darin ein oder mehrere zusätzliche Funktionsteile verbaut sind.

Bei den Anschlusselementen kann es sich um Steckverbinder oder sonstige Anschlussteile für die Herstellung von Stromversorgungen, die Signalübertragung und/oder für den elektronischen Datenaustausch handeln. Neben der reinen Funktion der Strom-, Signal- und/oder Datenübertragung können die Anschlusselemente auch mechanische Fixierungsmittel aufweisen, um ein Bauteil an das Anschlusselement andocken und dort halten zu können oder um die elektrischen Anschlüsse gegen Spritzwasser zu schützen. Die Anbau- und/oder Einbauräume können maßgenau passend ausgestaltet sein, um darin die jeweiligen Funktionsbauteile aufzunehmen. Für die spätere Montage der Funktionsbauteile können passgenaue Anschlüsse und Befestigungselemente wie Klemm-, Clips oder Rastverschlüsse bereits montagefertig in das einstückige Formteil eingeformt sein. Ein in die Ausnehmung eingesetztes Anschlusselement kann auf der dem Mittelabschnitt zugewandten Seite an einen Kabelstrang angeschlossen sein, der ebenfalls bereits in den Fahrradlenker integriert ist. In diesem Fall weist der Fahrradlenker eine fertig vormontierte Verkabelung auf, die nur noch an die elektrischen und/oder elektronischen fahrradseitig montierten Komponenten mit einem Gegenstecker angeschlossen werden muss. Dazu ist es vorteilhaft, wenn das in die Ausnehmung eingesetzte Anschlusselement auf der dem Mittelabschnitt abgewandten Seite elektrische und/oder elektronische Kontakte aufweist, an die die fahrradseitig vorhandenen Komponenten anschließbar sind. Die an die im Lenker vorhandene Verkabelung anzuschließenden Funktionsteile können ebenfalls schon vormontiert mit dem Fahrradlenker an einen Fahrradhersteller oder -händler geliefert werden, oder die Funktionsteile werden dort oder vom Endkunden an den Fahrradlenker angebaut und angeschlossen. Durch den bereits vorhandenen Kabelstrang ist das aber schnell und einfach möglich.

In dem Mittelabschnitt können auch mehrere Ausnehmungen vorhanden sein. So kann beispielsweise eine Ausnehmung für ein Display, eine Ausnehmung für ein Anschlusselement und zwei Ausnehmungen wie Funktionsteile wie beispielsweise Lichtstreifen für ein Tagfahrlicht oder beliebige andere für einen Anwendungsfall geeigneten Kombinationen von mehreren Ausnehmungen vorgesehen sein.

Mit dem Begriff des Mittelabschnitts ist der mittlere Abschnitt des Fahrradlenkers gemeint, über den der Fahrradlenker mit dem Steuerkopf des Fahrrads verbunden ist. Mit den Lenkerarmen sind die seitlichen Ausleger gemeint, die in seitlicher Richtung vom Mittelabschnitt abstehen. Dabei ist es nicht zwingend erforderlich, dass sich die einteilig mit dem Mittelabschnitt verbundenen Lenkerarme bis in den Griffbereich erstrecken. Wenn der Mittelabschnitt und die Lenkerarme als ein einziges Formteil ausgebildet sind, gelten die vorstehenden Ausführungen auch für ein um die an das Mittelabschnitt angeformten Lenkerarme entsprechend. Der jeweilige Lenkerarm kann noch durch ein oder mehrere separate Anbauteile verlängert sein.

Nach einer Ausgestaltung der Erfindung ist in den Mittelabschnitt des Fahrradlenkers zumindest ein integrierter Kabelstrang eingelegt, der der Stromversorgung von an den Fahrradlenker angebauten und/oder darin eingebauten elektrischen oder elektronischen Funktionsteilen dient. Die Stromversorgung kann für die Beleuchtung, ein Display, die Motorsteuerung, das Batteriemanagement, die Schaltung, einen USB-Anschluss, ein WLAN-Netzwerk, ein Handy oder für Bedientasten und/oder Navigationsgeräte vorgesehen sein, die am Fahrradlenker fest angebracht sind oder die dort angedockt werden können. Der Kabelstrang kann mit dem Mittelabschnitt in seinem ganzen oder teilweisen Verlauf in den Kunststoff des Mittelabschnitts fest eingegossen sein, was in dem Spritzwerkzeug zur Herstellung des Mittelabschnitts erfolgt sein kann, oder es sind Hohlkanäle im Mittelabschnitt des Fahrradlenkers ausgebildet, in denen der Kabelstrang verlegt ist. Bei dem Kabelstrang kann es sich um ein einziges zweiadriges Stromversorgungskabel handeln, das einen oder mehrere am Fahrradlenker verbaute Funktionsteile mit Strom versorgt, beispielsweise mit einer Spannung von 12 V, und an das die entsprechenden Stromverbraucher angeschlossen sind, oder es sind mehrere Stromversorgungskabel in dem Fahrradlenker verlegt, die an unterschiedliche Stromverbraucher angeschlossen sind und die auf diese Weise auch mit unterschiedlichen Spannungen versorgt werden können, beispielsweise einer Niederspannung für elektronische Bauteile und einer 12 V-Spannung. Indem der Kabelstrang in den Fahrradlenker integriert ist, muss dieser nicht mehr bei der Montage des mit dem Fahrradlenker versehenden Fahrrads separat montiert werden. Bei der Montage des Fahrrads kann der Lenker als Zulieferteil bereits fertig mit dem Kabelstrang ausgestattet sein, und es genügt, nur noch die jeweiligen Funktionsteile an den Fahrradlenker anzubauen und an den Kabelstrang anzuschließen, soweit sie nicht ebenfalls bereits in den Fahrradlenker integriert und fertig vormontiert sind. Der in den Fahrradlenker integrierte Kabelstrang ist optisch nicht sichtbar, er ist besser gegen Witterungseinflüsse und Beschädigungen geschützt, und er kann vorkonfektioniert mit der passenden Länge, der passenden Anzahl von Anschlüssen und der passenden Anzahl von Adern in den Fahrradlenker eingebaut werden. Die vorstehenden Ausführungen gelten entsprechend, wenn in den Fahrradlenker mehrere Kabelstränge zur Stromversorgung integriert sind.

Nach einer Ausgestaltung der Erfindung ist in den Mittelabschnitt des Fahrradlenkers zumindest ein integrierter Kabelstrang eingelegt, der der Übermittlung von Daten und/oder Signalen dient, die zwischen elektronischen Komponenten, die am Fahrrad montiert sind, und elektronischen Funktionsteilen, die am Fahrradlenker montiert sind, ausgetauscht werden. Für den oder die Kabelstränge zur Datenübermittlung gelten die vorstehenden Ausführungen zum Kabelstrang zur Stromversorgung prinzipiell entsprechend. Bei einem Kabelstrang zum Datenaustausch gilt darüber hinaus noch, dass dieser mit Schnittstellen zur Datenkommunikation ausgestattet sein kann. Dies kann beispielsweise ein Stecker sein, an den ein Mikrochip angeschlossen ist, über den das angeschlossene Funktionsteil mit anderen an den Kabelstrang angeschlossenen Funktionsteilen kommunizieren kann, beispielsweise in einem Busnetz wie einem CAN-Busnetz. Gerade für solche spezielleren Vernetzungsaufgaben ist es vorteilhaft, einen Fahrradlenker zu verwenden, der über einen einzigen Kabelstrang und einen Stecker an die übrigen fahrradseitigen elektronischen Funktionsteile angeschlossen werden kann. Die Montage wird dadurch vereinfacht, schneller und fehlerfreier, weil der Fahrradlenker nur noch als ein Bauteil an das Fahrrad angebaut und dabei elektrisch und elektronisch fertig angeschlossen wird. Der für die Datenübertragung geeignete Kabelstrang muss nicht zwangsläufig aus einem elektrisch leitenden Material wie beispielsweise einem Metall hergestellt sein, es ist beispielsweise auch eine Datenübertragung mittels Glasfasern als Lichtwellenleiter möglich, wenn an den Enden der Glasfasern entsprechende Sende- und Empfangsmittel vorhanden sind. Solche Glasfasern können in einer Doppelfunktion als Datenübertragungsmedium und als Faserverstärkung des verwendeten Kunststoffs in dem Fahrradlenker verbaut sein.

Nach einer Ausgestaltung der Erfindung reicht der Kabelstrang vom Mittelabschnitt bis in zumindest einen der Lenkerarme hinein. Die Verkabelung des Mittelabschnitts muss nicht auf dieses Bauteil beschränkt sein. Es ist möglich, den jeweiligen Kabelstrang so lang auszuführen, dass auch am Lenkerende befindliche Bauteile mit Strom versorgt werden und/oder Daten und/oder Signale bis an die Enden der Lenkerarme übermittelt werden. Das kann beispielsweise erforderlich sein, wenn am Ende des Lenkerarms seitliche Begrenzungslichter, Blinker, Schalter und/oder Bedienfelder oder vergleichbare Komponenten angeordnet sind.

Nach einer Ausgestaltung der Erfindung sind in den Mittelabschnitt und/oder die mit dem Mittelabschnitt verbundenen Lenkerarme Befestigungspunkte für Anbauteile eingeformt. Als Anbauteile können an den Befestigungspunkten beispielsweise Lichtelemente, ein Fahrradkorb, ein Getränkehalter, Designelemente, Abdeckblenden, Spiegel, ein Spritzschutz und/oder eine Scheibe befestigt werden. Die Befestigungspunkte können als Einstecklöcher, Pins, Clipse oder sonstige zur Herstellung einer mechanischen Verbindung geeignete Formgestaltungen ausgestaltet sein. Die Anordnung der Befestigungspunkte am Mittelabschnitt und/oder den Lenkerarmen ermöglicht eine schnelle und werkzeuglose Montage der entsprechenden Anbauteile, wenn diese passend zu den Befestigungspunkten geformte Anschlussteile aufweisen. Die Befestigungspunkte und die Anschlussteile der Anbauteile können auf diese Weise als eine Schnellkupplung ausgestaltet sein, die die Anbauteile während des Gebrauchs des Fahrrads ausreichend fest am Fahrradlenker halten, aber diese auch schnell an- und abbaubar machen. Insbesondere zur Vermeidung von Diebstählen können die Anbauteile leicht vom Fahrrad abgenommen und mitgenommen werden. Durch den Kunststoff-Fahrradlenker können die Befestigungspunkte direkt in den Korpus des Fahrradlenkers eingeformt werden, so dass diese nicht mehr gesondert angebaut werden müssen und gleichwohl optisch ansprechend in das Design des Fahrradlenkers integriert sind.

Nach einer Ausgestaltung der Erfindung sind Anbaupositionen für mechanische Bedienelemente in den Mittelabschnitt und/oder die mit dem Mittelabschnitt verbundenen Lenkerarme eingeformt. Bei den mechanischen Bedienelementen kann es sich beispielsweise um Bremshebel, Schalthebel, eine Klingel oder Hupe, eine Taste zur Betätigung einer höhenverstellbaren Sattelstütze oder einer Federbeinverstellung, Lenkerhörnchen oder um den Anbau von Rückspiegeln handeln. Derartige Bedienelemente werden häufig mittels Montageschellen am Fahrradlenker befestigt, für die runde Lenkerquerschnitte im Bereich der Anbauposition vorteilhaft sind. So können der Mittelabschnitt und/oder die Lenkerarme Abschnitte aufweisen, die beispielsweise eine runde Querschnittsform aufweisen, um daran mechanische Bedienelemente befestigen zu können. Wenn die Befestigungsmittel an den Bedienelementen passend darauf abgestimmt sind, können aber auch andere Querschnittsformen oder andere Ein- oder Ausformungen verwendet sein, um die mechanischen Bedienelemente am Fahrradlenker zu befestigen. Da der Mittelabschnitt und die Lenkerarme als ein oder mehrere Kunststoff-Formteile ausgebildet sind, macht es keinen zusätzlichen Aufwand, entsprechende Formen in dem Werkzeug zur Herstellung des Fahrradlenkers auszubilden.

Nach einer Ausgestaltung der Erfindung weisen der Mittelabschnitt und/oder die mit dem Mittelabschnitt verbundenen Lenkerarme zumindest eine in das oder die jeweiligen Formteile eingeformte Bedientaste auf. Die Bedientaste oder die mehreren Bedientasten sind als Bedienflächen ausgebildet, die manuell betätigt werden können, um eine Funktion einer am Fahrrad verbauten Komponente ein- oder auszuschalten oder eine eingestellte Funktion zu verstellen. Die Bedientasten können als geschlossene Folientastatur ausgebildet sein, die darunter befindliche mechanische Tasten gegen Witterungseinflüsse schützt. Die Bedientasten können aber auch als bewegliche Hubelemente ausgeführt sein, die bei einer Betätigung eine Hubbewegung ausführen und dabei einen elektrischen Impuls auslösen. Es ist aber auch möglich, als Bedienelement berührungsempfindliche Touchflächen vorzusehen, die keine Bewegung ausführen, sondern die Annäherung eines Fingers sensieren und dieses Sensorsignal als Stellbefehl an die davonangesteuerte Komponente weiterleiten. Die von der Bedientaste angesteuerte Komponente kann sich am Fahrradlenker befinden, sie kann aber auch an einer anderen Stelle am Fahrrad verbaut sein. Um das mit der Bedientaste ausgegebene Stellsignal an die adressierte Komponente weiterzuleiten, ist es vorteilhaft, wenn die Bedientaste an einen im Fahrradlenker verlegten Kabelstrang angeschlossen ist. Es ist aber auch eine drahtlose Signalübertragung per Funk möglich, wenn die Bedientaste entsprechend ausgestattet und eingerichtet ist. Durch die in den Fahrradlenker integrierte Bedientaste muss diese nicht mehr separat am Fahrradlenker angebaut werden. Die Bedientaste kann je nach Ausstattung des mit dem Fahrradlenker versehenen Fahrrads unterschiedlich belegt sein. So ist es möglich, über die Bedientaste den Elektromotor eines E-Bikes ein- und auszuschalten oder einen unterschiedlichen Betriebsmodus einzustellen. Genauso kann die Bedientaste auch zum Ein- und Ausschalten der Beleuchtung, des Displays oder anderer Fahrradkomponenten benutzt werden.

Nach einer Ausgestaltung der Erfindung ist in den Fahrradlenker ein Signalgeber eingeformt. Als Signalgeber dient beispielsweise eine Klingel oder eine Hupe. Die Klingel und die Hupe können mechanisch oder elektrisch betätigt werden. Mit der Einformung ist gemeint, dass die für den Betrieb des Signalgebers erforderlichen Bauelemente zumindest teilweise innerhalb des vom Fahrradlenkers eingenommenen Bauraums untergebracht sind. So können beispielsweise die Betätigungselemente, der Schallerzeuger und/oder Energieerzeuger innerhalb des vom Fahrradlenker ausgefüllten Bauraums eingebaut sein. Bei einem elektrisch betätigbaren Signalgeber ist es vorteilhaft, diesen über einen Kabelstrang zur Stromversorgung zu verbinden. Das Ein- und Ausschalten des Signalgebers kann über Bedientasten, aber auch über das Display erfolgen, das über einen Kabelstrang mit dem Signalgeber verbunden ist. Im Fahrradlenker kann auch ein Gehäuse für eine Batterie ausgebildet sein, damit der elektrisch betätigbare Signalgeber mit Strom versorgt ist.

Nach einer Ausgestaltung der Erfindung ist in den Fahrradlenker eine Griffheizung integriert. Die Griffheizung kann elektrisch betriebene Heizpatronen aufweisen, die in den Griffbereichen im Innenraum des Fahrradlenkers angeordnet sind. Die Energieversorgung der Heizpatronen kann über eine im Fahrradlenker integrierte Batterie oder einen fahrradseitig montierten Akku erfolgen, die mit den Heizpatronen über einen Kabelstrang verbunden sind. Die Bedienung kann beispielsweise über das Display oder Bedientasten erfolgen.

Nach einer Ausgestaltung der Erfindung sind der Mittelabschnitt und die Lenkerarme als einteiliges Formteil aus einem faserverstärkten Kunststoff hergestellt. Durch die Ausbildung als einteiliges Formteil werden Relativbewegungen zwischen mehreren Bauteilen im Bereich der Schnittstellen zwischen den Bauteilen vermieden. Das Dämpfungsverhalten des Fahrradlenkers hinsichtlich von Vibrationen und Stößen des Vorderrads ist homogen und gleichbleibend. Das einteilige Formteil wird von seiner Ausformung des Raumköpers her so gestaltet, dass es die auf die Lenkerarme einwirkenden Stützkräfte und Lenkimpulse des Benutzers gut auf den Steuerkopf überträgt. Dadurch verfügt es über eine hohe Stabilität. Durch die einteilige Ausführung werden auch Rückmeldungen des Vorderrads an den Benutzer über darauf einwirkende Kräfte nicht über Schnittstellen zwischen verschieden steif ausgelegten Bauteilen verwässert, und es kann auch nicht zu Knarzgeräuschen durch geringfügige Bewegungen zwischen miteinander verbundenen Bauteilen kommen.

Nach einer Ausgestaltung der Erfindung weisen der Mittelabschnitt und/oder die Lenkerarme jeweils in zumindest einem Abschnitt einen in seinem Außenumfang unrund ausgestalteten Profilquerschnitt auf. Durch den unrunden Profilquerschnitt können im Mittelabschnitt und/oder in den Lenkerarmen Hohlräume als Aufnahmeräume geschaffen werden, in die ein Display, ein Bedienelement, ein sonstigen Funktionsteil und/oder elektrische und/oder elektronische Anschlusselemente eingebaut werden können. Entsprechend ausgestaltete Hohlräume können seitlich durch Versteifungsrippen begrenzt sein, die sich in eine Belastungsrichtung einer auf den Fahrradlenker einwirkenden Kraft erstrecken. Die Versteifungsrippen werden auf diese Weise doppelt genutzt, indem sie den Fahrradlenker versteifen und die in den Hohlraum eingesetzten Teile gegen die Witterung und Stöße schützen. Auch kann der Lenkerarm durch unrund gestaltete Querschnittsformen belastungsoptimiert ausgestaltet werden. Die unrunde Gestaltung des Profilquerschnitts findet sich dort, wo sie dazu genutzt werden kann, die Belastbarkeit des Fahrradlenkers in einer gebrauchs-üblichen Belastungsrichtung zu erhöhen. So kann der Rohrquerschnitt der Lenkerarme beispielsweise oval ausgestaltet und das Oval mit seiner längeren Erstreckungslänge in vertikaler Richtung ausgerichtet sein, um den Fahrradlenker in der Richtung der Stützlast belastbarer zu machen. Auch andere spiegelsymmetrische oder nicht-spiegelsymmetrische Querschnittsformen kommen in Betracht.

Nach einer Ausgestaltung der Erfindung weisen die Lenkerarme jeweils abschnittweise einen teilweise oder vollständig umschlossenen Hohlraum mit über den Profilquerschnitt unterschiedlich dicken Wandstärken der Außenwände auf. Die Lenkerarme können in Bereichen, in denen sie stark belastet sind, massiv oder nahezu massiv ausgeführt werden, um dort eine ausreichende Stabilität zu erhalten. In anderen, insbesondere in weniger stark belasteten Bereichen, können aber auch Hohlräume im Inneren der Lenkerarme ausgebildet sein. Dort ist es durch die unterschiedlich dicken Wandstärken möglich, den Fahrradlenker von seiner Konstruktion und Bauweise her noch besser an die im täglichen Gebrauch auftretenden Lastkollektive anzupassen. Der Fahrradlenker kann dadurch leichter gehalten werden, und es wird nur so viel Material für die Herstellung eines Fahrradlenkers verbraucht, wie es für seinen Gebrauch und die dabei auftretenden Lastkollektive zwingend erforderlich ist. Über Finite-Elemente-Rechnungen und die daraus resultierenden Bauteiloptimierungen kann ein Fahrradlenker aus Kunststoff genau so ausgelegt werden, dass er die technischen Belastungsparameter genau einhält. Die im Fahrradlenker im Bereich der Lenkerarme ausgebildeten Hohlräume können dazu genutzt werden, darin elektrische und/oder mechanische Komponenten einzubauen. Bei den Komponenten kann es sich um Bowdenzüge, Kabel, Batterien, Bordrechner und dergleichen handeln.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von oben auf einen Fahrradlenker,
- Fig. 2:: eine Explosionszeichnung mit einer Ansicht von schräg oben auf die in dem in Fig. 1 gezeigten Fahrradlenker verbauten Kom ponenten,
- Fig. 3:: eine Explosionszeichnung mit einer Ansicht von schräg unten auf die in dem in Fig. 1 gezeigten Fahrradlenker verbauten Komponenten,
- Fig. 4:: eine Ansicht auf einen Fahrradlenker von schräg vorne mit an-gebauten Funktionsteilen, und
- Fig. 5:: eine Ansicht von schräg unten auf den Fahrradlenker mit einge-bautem Kabelstrang.

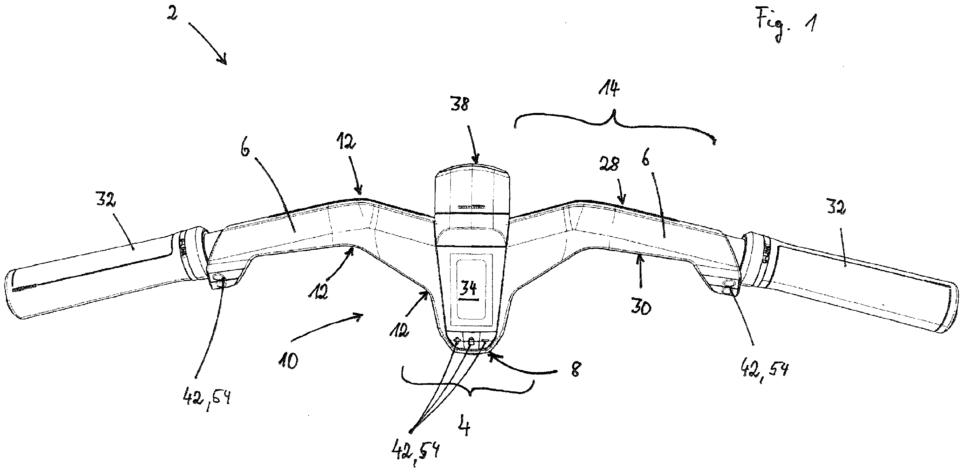

In Fig. 1 ist ein Fahrradlenker 2 aus einem faserverstärkten Kunststoff mit einem Lenkerkern gezeigt, der einen Mittelabschnitt 4 zur Verbindung mit einem Steuerkopf 8 und seitlich ausgerichteten, an gegenüberliegenden Seiten des Mittelabschnitts 4 ausgebildeten Lenkerarmen 6 aufweist. Der Mittelabschnitt 4 und die Lenkerarme 6 sind als einteiliges Formteil 10 aus einem faserverstärkten Kunststoff hergestellt. Der faserverstärkte Kunststoff weist einen Faser-Volumenanteil von mindestens 50 % auf.

In der in Fig. 1 gezeigten Ansicht ist gut erkennbar, dass die Übergangsbereiche 12 zwischen dem Mittelabschnitt 4 und den seitlichen Lenkerarmen 6 in einem kerbfreien bogenförmigen Verlauf ausgestaltet sind.

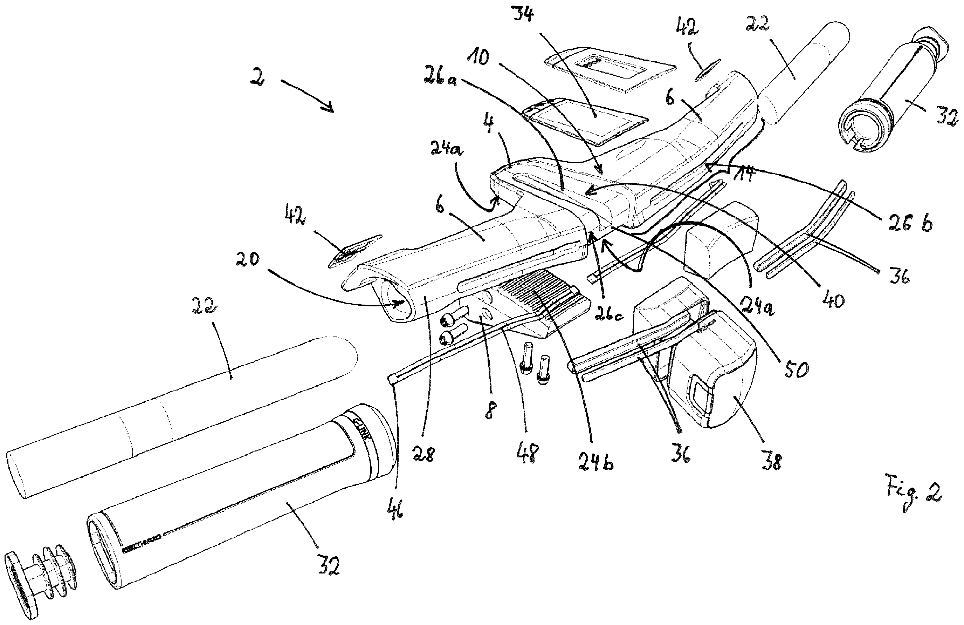

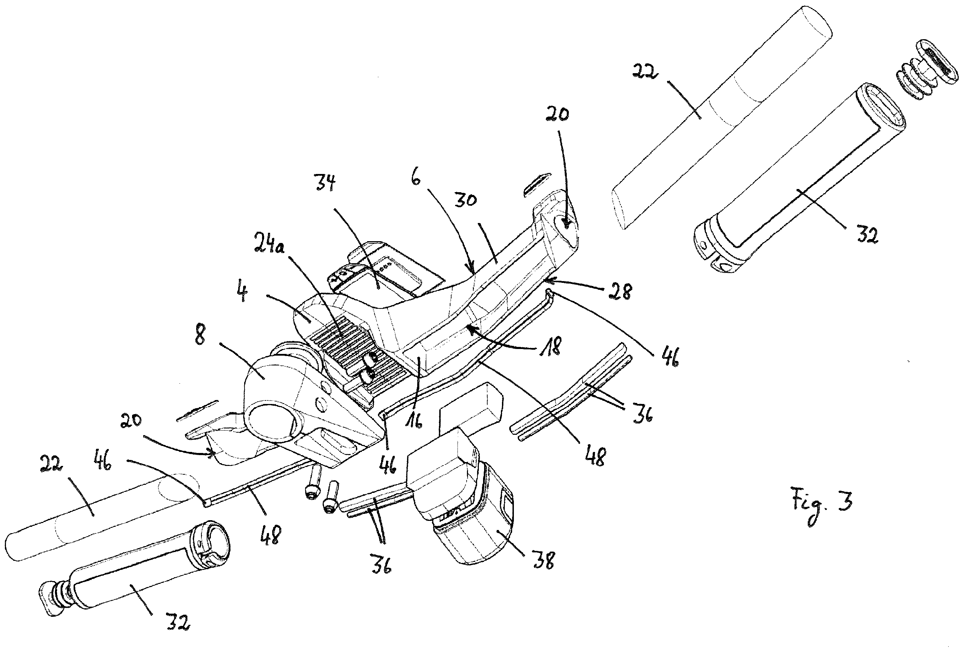

Die Lenkerarme 6 weisen jeweils in zumindest einem Abschnitt 14 einen in seinem Außenumfang unrund ausgestalteten Profilquerschnitt auf. Wie aus den Fig. 1 und 2 erkennbar ist, sind die nach oben weisenden Oberflächen und die in Fahrtrichtung weisenden Frontflächen der Lenkerarme 6 im Ausführungsbeispiel abgeflacht, aber immer noch leicht gewölbt und annähernd in einem rechten Winkel zueinander angeordnet, so dass sich im gezeigten Ausführungsbeispiel ein zumindest annähernd kastenförmiges Querschnittsprofil ergibt. Wie in der Fig. 3 zu erkennen ist, ist die Frontfläche 28 und die Rückwand 30 jeweils aus einer Fläche einer Versteifungsrippe 16 gebildet. Die beiden Versteifungsrippen 16 begrenzen zwischen sich jeweils einen nach unten offenen Hohlraum 18. Nach oben hin sind die Hohlräume 18 durch die Oberseite des Lenkerarms 6 geschlossen. Die Versteifungsrippen 16 können über ihre Länge hinweg und über den Profilquerschnitt der Lenkerarme 6 verteilt unterschiedlich dicke Wandstärken aufweisen.

In den Fig. 2 und 3 ist zu erkennen, dass die Lenkerarme 6 an ihren äußeren Enden jeweils eine Aufnahmeöffnung 20 zur Aufnahme einer Verlängerungsstange 22 aufweisen. Im gezeigten Ausführungsbeispiel weisen zumindest die Verlängerungsstangen 22 abschnittweise jeweils einen in seinem Außenumfang kreisrunden Profilquerschnitt auf. Auf die Verlängerungsstangen 22 werden im Ausführungsbeispiel die Handgriffe 32 aufgesetzt.

In den Fig. 2 und 3 ist zu erkennen, dass in dem einstückigen Formteil 10 Anbau- und/oder Einbauräume 26 für Funktionsbauteile ausgebildet sind. In Fig. 2 ist beispielsweise der Einbauraum 26a erkennbar, der eine Ausnehmung 40 bildet, in die ein Display 34 eingesetzt werden kann. Zusätzlich ist in den Fig. 2 und 3 noch eine Abdeckscheibe gezeigt, die den Einbauraum 26a nach ihrer Montage dichtend abdeckt. In die Einbauräume 26b können die Tagfahrlichter 36 eingesetzt werden, die aus LED-Lichtleisten gebildet sind. An den Anbauraum 26c mit dem Befestigungspunkt 50 kann beispielsweise der Scheinwerfer 38 angebaut werden.

In Fig. 1 sind die Tasten neben den Handgriffen 32 als Bedienungselemente 42 erkennbar. Weitere Tasten als Bedienungselemente 42 finden sich unterhalb des Displays 34. Als ein Beispiel für ein elektrisches Funktionsteil 44 ist in den Figuren 1-3 der Scheinwerfer 38 gezeigt.

Am Mittelabschnitt 4 ist eine Verspannungsfläche 24a für die Verbindung mit einem Steuerkopf 8 ausgebildet. Die am Mittelabschnitt 4 ausgebildete Verspannungsfläche 24a korrespondiert zu einer Verspannungsfläche 24b, die an dem Steuerkopf 8 ausgebildet ist, der mit dem zeichnerisch nicht dargestellten Gabelschaftrohr der Vorderradgabel verbunden ist. Beide Verspannungsflächen 24a, 24b sind gerippt ausgeführt, so dass sie nicht in Längsrichtung zueinander verschieblich sind, wenn sie aufeinanderliegen. In ihrer Einbaulage sind sie mit einer Spannschraube gegeneinander verspannt. Die Verspannungsflächen 24a, 24b sind so ausgebildet, dass die Verspannungsfläche 24a des Fahrradlenkers 2 nicht genau in Längsrichtung mittenzentriert auf der Verspannungsfläche 24b aufliegen muss, sondern auch um einige Rippen nach vorne oder hinten verlagert auf der Verspannungsfläche 24b aufliegen kann. Dadurch ist es möglich, den Fahrradlenker 2 um einige cm nach vorne oder hinten verlagert auf einem Fahrrad zu montieren.

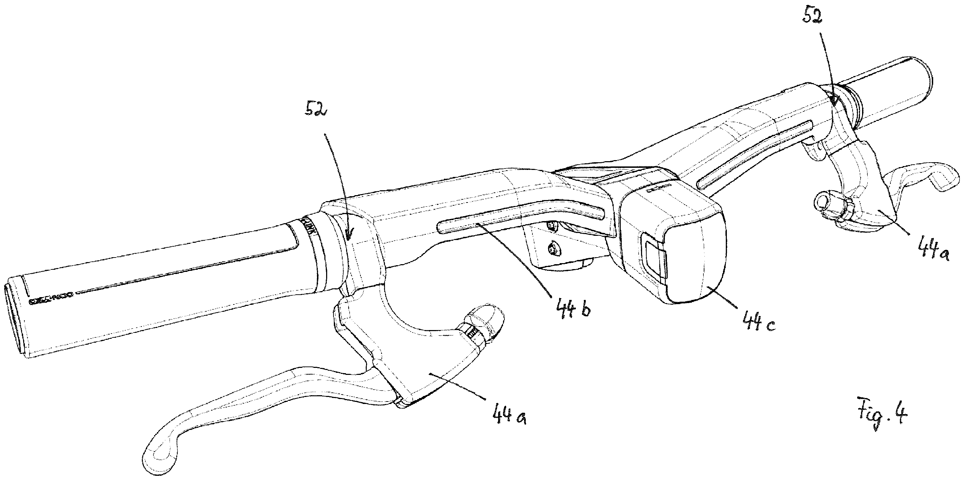

In Fig. 4 ist eine Ansicht auf einen Fahrradlenker 2 von schräg vorne gezeigt. In dieser Ansicht sind als Funktionsteile 44 die Handbremshebel 44a, die Tagfahrlichter 44b und der Scheinwerfer 44c dargestellt. Die Funktionsteile 44 sind fest an den Fahrradlenker 2 angebaut, der Fahrradlenker 2 kann in dieser Form an ein Fahrrad angebaut werden. Für den Hersteller ist das eine Montagevereinfachung, da er nur noch ein einziges Bauteil an dem Fahrrad montiert und nicht mehr eine Vielzahl von Bauteilen, die zudem noch elektrisch und/oder mechanisch miteinander verbunden werden müssen.

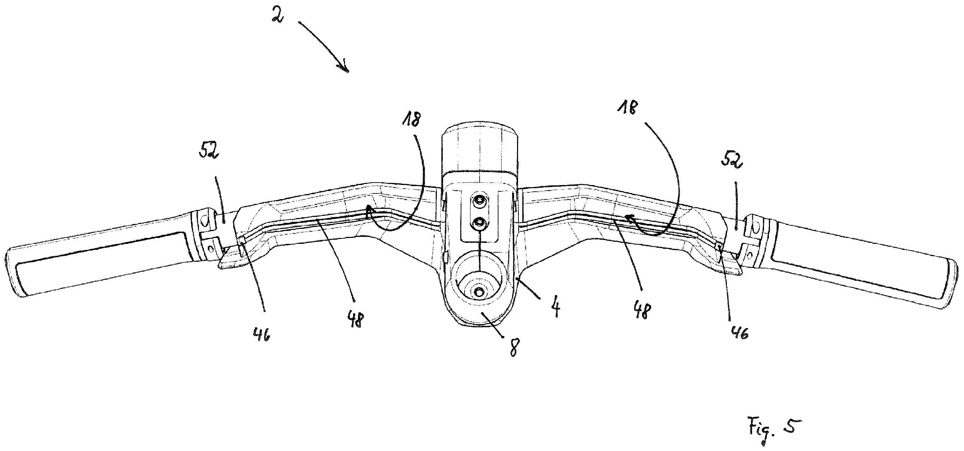

In Fig. 5 ist eine Ansicht von schräg unten auf einen Fahrradlenker 2 gezeigt, bei dem in den Hohlraum 18 ein Kabelstrang 48 eingelegt ist. An seinen Enden verfügt der Kabelstrang 48 über Anschlusselemente 46, an die elektrische Funktionsteile angeschlossen werden können. Die Kabelstränge 48 sind so in dem Fahrradlenker 2 verlegt, dass sie beim normalen Gebrauch aus einer Ansicht von oben oder von der Seite her nicht sichtbar sind, wie in Fig. 1 erkennbar. Die Fig. 5 zeigt Anbaupositionen 52 für mechanische Bedienelemente, wie beispielsweise die in Fig. 4 dargestellten Handbremshebel 44. Andere Anbaupositionen können im Mittelabschnitt 4 und/oder in die mit dem Mittelabschnitt 4 verbundenen Lenkerarme 6 eingeformt sein.

Die Erfindung ist nicht auf das vorstehend beschriebene Ausführungsbeispiel beschränkt. Dem Fachmann bereitet es keine Schwierigkeiten, das Ausführungsbeispiel auf eine ihm geeignet erscheinende Weise abzuwandeln, um es an einen konkreten Anwendungsfall anzupassen.

### Bezugsziffern liste

- 2: Fahrradlenker
- 4: Mittelabschnitt
- 6: Lenkerarm
- 8: Steuerkopf
- 10: Formteil
- 12: Übergangsbereich
- 14: Abschnitt
- 16: Versteifungsrippe
- 18: Hohlraum
- 20: Aufnahmeöffnung
- 22: Verlängerungsstange
- 24: Verspannungsfläche
- 26: Anbau- und/oder Einbauraum
- 28: Frontfläche
- 30: Rückwand
- 32: Handgriff
- 34: Display
- 36: Tagfahrlicht
- 38: Scheinwerfer
- 40: Ausnehmung
- 42: Bedienelement
- 44: Funktionsteil
- 46: Anschlusselement
- 48: Kabelstrang
- 50: Befestigungspunkt
- 52: Anbauposition
- 54: Bedientaste

## Patentansprüche

1. Fahrradlenker (2) aus einem faserverstärkten Kunststoff mit einem Lenkerkern, der einen Mittelabschnitt (4) zur Verbindung mit einem Steuerkopf (8) und seitlich ausgerichteten, an gegenüberliegenden Seiten des Mittelabschnitts (4) ausgebildeten und mit dem Mittelabschnitt (4) verbundenen Lenkerarmen (6) aufweist, **dadurch gekennzeichnet, dass** der Mittelabschnitt (4) des Fahrradlenkers (2) als Formteil (10) aus einem faserverstärkten Kunststoff hergestellt ist, das Formteil (10) ein tragendes Element des Fahrradlenkers (2) bildet, und das Formteil (10) zumindest eine in den Mittelabschnitt (4) eingeformte Ausnehmung (40) zur Aufnahme eines Displays (34), eines Bedienelements (42), eines sonstigen Funktionsteils (44) und/oder eines elektrischen und/oder eines elektronischen Anschlusselements (46) aufweist.

2. Fahrradlenker (2) nach Anspruch 1, **dadurch gekennzeichnet, dass** in den Mittelabschnitt (4) des Fahrradlenkers (2) zumindest ein integrierter Kabelstrang (48) eingelegt ist, der der Stromversorgung von an den Fahrradlenker (2) angebauten und/oder darin eingebauten elektrischen oder elektronischen Funktionsteilen (44) dient.

3. Fahrradlenker (2) nach Anspruch 1 oder 2, **dadurch gekennzeichnet, dass** in den Mittelabschnitt (4) des Fahrradlenkers (2) zumindest ein integrierter Kabelstrang (48) eingelegt ist, der der Übermittlung von Daten und/oder Signalen dient, die zwischen elektronischen Komponenten, die am Fahrrad montiert sind, und elektronischen Funktionsteilen (44), die am Fahrradlenker (2) montiert sind, ausgetauscht werden.

4. Fahrradlenker (2) nach einem der Ansprüche 2 oder 3, **dadurch gekennzeichnet, dass** der Kabelstrang (48) vom Mittelabschnitt (4) bis in zumindest einen der Lenkerarme (6) hineinreicht.

5. Fahrradlenker (2) nach einem der vorhergehenden Ansprüche, **dadurch gekennzeichnet, dass** in den Mittelabschnitt (4) und/oder die mit dem Mittelabschnitt (4) verbundenen Lenkerarme (6) zusätzlich Befestigungspunkte (50) für Anbauteile eingeformt sind.

6. Fahrradlenker (2) nach einem der vorhergehenden Ansprüche, **dadurch gekennzeichnet, dass** Anbaupositionen (52) für mechanische Bedienelemente in den Mittelabschnitt (4) und/oder die mit dem Mittelabschnitt (4) verbundenen Lenkerarme eingeformt sind.

7. Fahrradlenker (2) nach einem der vorhergehenden Ansprüche, **dadurch gekennzeichnet, dass** der Mittelabschnitt (4) und/oder die mit dem Mittelabschnitt (4) verbundenen Lenkerarme (6) zumindest eine in das oder die jeweiligen Formteile (10) eingeformte Bedientaste (54) aufweisen.

8. Fahrradlenker (2) nach einem der vorhergehenden Ansprüche, **dadurch gekennzeichnet, dass** in den Fahrradlenker (2) ein Signalgeber eingeformt ist.

9. Fahrradlenker (2) nach einem der vorhergehenden Ansprüche, **dadurch gekennzeichnet, dass** in den Fahrradlenker (2) eine Griffheizung integriert ist.

10. Fahrradlenker (2) nach einem der vorhergehenden Ansprüche, **dadurch gekennzeichnet, dass** der Mittelabschnitt (4) und die Lenkerarme (6) als einteiliges Formteil (10) aus einem faserverstärkten Kunststoff hergestellt sind.

11. Fahrradlenker (2) nach einem der vorhergehenden Ansprüche, **dadurch gekennzeichnet, dass** der Mittelabschnitt (4) und/oder die Lenkerarme (6) jeweils in zumindest einem Abschnitt (14) einen in seinem Außenumfang unrund ausgestalteten Profilquerschnitt aufweisen.

12. Fahrradlenker (2) nach einem der vorhergehenden Ansprüche, **dadurch gekennzeichnet, dass** die Lenkerarme (6) jeweils abschnittweise einen teilweise oder vollständig umschlossenen Hohlraum (18) mit über den Profilquerschnitt unterschiedlich dicken Wandstärken der Außenwände aufweisen.
